# EUROPEAN PATENT APPLICATION

(11) **EP 0 872 183 A2**
(43) Date of publication of application: **21.10.1998**
(21) Application number: 98103891.2
(22) Date of filing: 05.03.1998
(51) Int. Cl.: A21D 13/08, A21D 6/00

(54) **Production of pastry products**

(30) Priority: 20.03.1997 GB 9705825
(71) Applicant: James, Steven Walter, Evesham, Worcestershire WR11 6QL (GB)
(72) Inventor: James, Steven Walter, Evesham, Worcestershire WR11 6QL (GB)
(74) Representative: Higgins, Michael Roger

(57) **Abstract**

A method is described of producing a pastry product comprising the steps of producing a frozen filling (1) of a required shape followed by the step of folding unfrozen pastry (2) around the filling while the filling remains frozen. In a preferred method the pastry is formed into a sheet, for example by rolling, before being folded around the filling. The invention also provides apparatus for producing such a pastry product and a pastry product formed by such a method or the apparatus.

## Description

This invention relates to methods and apparatus for producing pastry products, and pastry products formed by such methods or apparatus.

Traditionally pastry products are made by one of two methods. In a first method, such as is used to produce sausage rolls or pasties for example, a sheet of pastry is folded around a soft filling, and the resulting product is either baked prior to being sold or is frozen in the unbaked state to enable it to be sold prior to being baked and consumed. In a second method the pastry is blocked to form a concave base, for example by being shaped in a mould such as a foil tin, and the base is then filled with a soft filling and a pastry lid is applied on top of the base in the manner in which a pie is traditionally formed. The resulting product can again be baked prior to being sold or can be frozen to allow it to be baked after it has been sold.

A considerable number of frozen pies and other frozen pastry products are now produced to allow long-term storage of such products and baking of the products by the consumer only just before they are to be eaten. However, known automated and semiautomated methods for producing such products suffer from a number of disadvantages in practice. Firstly it may be difficult to form the fillings in such a way that the finished product is of the required roundness or retains its shape when frozen or baked. Furthermore the use of costly depositing machines may be required to enable measured quantities of filling to be deposited for each product, and such machines generally require a substantial amount of setting up and are messy in use, as well as requiring a great deal of cleaning after use. Thus it may only be economical for manufacturers to use such depositing machines on long project runs.

It is an object of the invention to provide a novel production method for such pastry products which overcomes certain of the disadvantages of the known production methods.

According to the present invention there is provided a method of producing a pastry product comprising the step of producing a frozen filling of a required shape followed by the step of folding pastry around the filling while the filling remains frozen.

In a preferred method the pastry is formed into a sheet, for example by rolling, before being folded around the filling.

In the folding step, the pastry may be folded so as to surround the filling on all sides. Alternatively the pastry may be formed so as to surround the filling only partially leaving the filling exposed on at least one side. If required a pastry lid may be applied in a subsequent production step to cover the filling on said at least one side.

The step of producing the frozen filling may comprise pouring a quantity of the filling into a mould and then freezing the filling within the mould prior to removing the frozen block of filling from the mould.

If required the frozen filling block may be cut after being removed from the mould in order to form frozen fillings for a plurality of products.

Advantageously the frozen filling is at a temperature significantly below 0°C when the pastry is folded around the filling. Most preferably the filling is at a temperature below -10°C, for example at a temperature of about 25°C ± 5°C. The pastry may be substantially at room temperature, say about 20°C, during this step.

The invention also provides apparatus for producing a pastry product comprising freezing means for producing a frozen filling of a required shape, and pastry applying means for folding pastry around the filling while the filling remains frozen.

In addition the apparatus may comprise cutting means, such as a saw, for cutting a moulded block of filling substance produced by the freezer means in order to form frozen fillings for a plurality of products.

The invention also provides a pastry product formed by such a method or such apparatus.

In order that the invention may be more fully understood, reference will now be made, by way of example, to the accompanying drawing, in which:-
Figures 1, 2 and 3 show the basic steps in a production method in accordance with the invention; and
Figure 4 is a block diagram illustrating the successive steps in the production method.

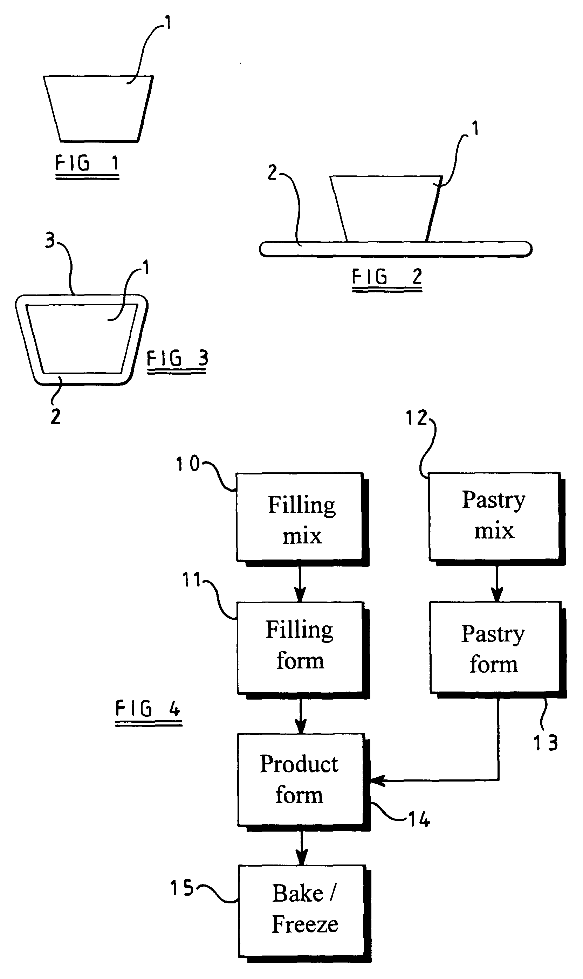

The basic sequence of operations used in a preferred method of producing pastry products in accordance with the invention will first be described with reference to Figures 1, 2 and 3. A shaped frozen block 1 of a filling, such as a meat or fruit filling, is initially formed as shown in Figure 1. The block 1 is then placed on a sheet of rolled pastry 2 as shown in Figure 2, and the sheet 2 of pastry is then folded over the block 1 to form a layer 3 of pastry totally surrounding the block 1 as shown in Figure 3. The block 1 is typically at a temperature of about -25°C and the resulting pastry product is approximately 70% frozen which enables the product to be packed immediately if the product is to be sold in the frozen, unbaked state. After packing the product is stored in a freezer. After it has been sold, the product may be baked, optionally after being thawed out, and the resulting product will have a better shape, for example better roundness, as compared with a conventional pastry product formed with a wet filling. Alternatively, of course, the product can be baked at the end of the production process in order to be sold in the baked state.

Automated or semi-automated apparatus for producing a pastry product by this method will now be described with reference to the diagram of Figure 4. In this case the apparatus includes a mixing unit 10 for mixing the filling in the wet state in conventional manner. After mixing the filling is supplied to a filling forming unit 11 which may include large block moulds or tubes into which the filling is poured before being quickly frozen. After freezing the resulting frozen blocks or tubes are cut into regular squares, rectangles, triangles, circles or D shapes for example, by means of a sawing machine so as to form a number of frozen filling blocks of predetermined size. The sawing machine can be set to produce a sequence of blocks of the same size so that portion control is extremely accurate.

Meanwhile the pastry is mixed in a mixing unit 12 in conventional manner and is then supplied to a pastry forming unit 13 in which the pastry is rolled to form a large sheet and cutters are used to produce a number of smaller sheets of pastry of the required size for the product. The frozen filling blocks from the unit 11 and the pastry sheets from the unit 13 are then supplied together to a product forming unit 14, for example by conveyor belts, and the product is then formed by folding of a sheet of pastry over each frozen filling block in the unit 14 in the general manner described with reference to Figures 1, 2 and 3.

Finally the formed products are supplied from the unit 14 to a baking or freezing unit 15, for example by a conveyor belt, and the product is either baked or frozen for sale. Where the product is frozen it will generally be packed before being supplied to the freezing unit.

## Claims

1. A method of producing a pastry product comprising the step of producing a frozen filling of a required shape (1) followed by the step of folding pastry (2) around part or all of the filling while the filling remains frozen.

2. A method according to Claim 1 further characterised in that the pastry is formed into a sheet before being folded around part or all of the filling.

3. A method according to Claim 1 or Claim 2 further characterised in that where the pastry is folded only around part of the filling, in a separate step a pastry cover is applied to the otherwise exposed part of the filling.

4. A method according to any preceding claim further characterised in that the frozen filling is produced by pouring a quantity of unfrozen filling into a mould and then freezing the filling within the mould prior to removing the frozen block of filling from the mould.

5. A method according to Claim 4 further characterised in that the frozen filling block is cut after being removed from the mould in order to form frozen fillings for a plurality of products.

6. A method according to any preceding claim in which the frozen filling is at a temperature significantly below 0° C when the pastry is folded around part or all of the filling.

7. A method according to any preceding claim further characterised in that the filling is at a temperature of between about -20° C and -30° C and the pastry is at substantially room temperature.

8. Apparatus for producing a pastry product by a method according to any one of Claims 1 to 7 comprising freezing means for producing a frozen filling of a required shape, and pastry applying means for folding pastry around part or all of the filling while the filling remains frozen.

9. Apparatus according to Claim 8 further characterised by comprising or including cutting means for cutting a moulded block of filling produced by the freezer means in order to form frozen fillings for a plurality of products.

10. A pastry product formed by a method according to any one of Claims 1 to 7.

11. A pastry product formed by apparatus according to Claim 8 or 9.
